# EUROPEAN PATENT APPLICATION

(11) **EP 4 333 394 A1**
(43) Date of publication of application: **06.03.2024**
(21) Application number: 22894777.6
(22) Date of filing: 15.11.2022
(51) Int. Cl.: H04L 45/24

(54) **PATH DETERMINATION METHOD AND APPARATUS**

(30) Priority: 17.11.2021 CN 202111361408
(71) Applicant: Huawei Technologies Co., Ltd., Longgang Shenzhen, Guangdong 518129 (CN)
(72) Inventor: LI, Dongdong, Shenzhen, Guangdong 518129 (CN); YAN, Fei, Shenzhen, Guangdong 518129 (CN)
(74) Representative: Pfenning, Meinig & Partner mbB
(86) International application number: PCT/CN2022/131967
(87) International publication number: WO 2023/088244

(57) **Abstract**

This application discloses a path determining method and apparatus. The method includes: receiving a packet; and selecting a target path from a plurality of equal-cost paths in a first group of ECMP entries in a forwarding table based on a first equal-cost multi-path ECMP identifier, and forwarding the packet based on the target path, where the first ECMP identifier indicates that at least one valid equal-cost path exists in the plurality of equal-cost paths in the first group of ECMP entries; and the first group of ECMP entries is a last-level ECMP entry in a plurality of levels of ECMP entries in the forwarding table. An ECMP identifier of each group of ECMP entries in each level of ECMP entries in the forwarding table may be used to determine whether a valid equal-cost path exists in the group of ECMP entries. This implements fast path selection in an ECMP cascading scenario, and improves path selection efficiency.

## Description

This application claims priority to Chinese Patent Application No. 202111361408.8, filed with the China National Intellectual Property Administration on November 17, 2021 and entitled "PATH DETERMINING METHOD AND APPARATUS", which is incorporated herein by reference in its entirety.

### TECHNICAL FIELD

This application relates to the field of network communication technologies, and in particular, to a path determining method and apparatus.

### BACKGROUND

In a network communication process, equal-cost multi-path (equal-cost multi-path, ECMP) is configured between nodes. The ECMP not only increases network bandwidth, but also provides a route redundancy backup capability for a network when some paths are faulty. ECMP cascading occurs when different network models are stacked. Different levels of the ECMP can store different types of labels. For example, in a VPN over LDP over SR-TE scenario, a forwarding entry of a node may include three levels of ECMP, where one level of the ECMP corresponds to a private network label, one level of the ECMP corresponds to an LDP label, and another level of the ECMP corresponds to a tunnel label. Each level of the ECMP includes one or more members (indicating a path that forms the ECMP, which may also be referred to as an equal-cost path).

When members at a level of the ECMP fail, to ensure continuity of sequence numbers allocated to the members in the ECMP, a control plane needs to delete a faulty member from the level of the ECMP, reorder other members, and re-deliver an updated ECMP entry to a data plane, so that the data plane can correctly select a path. The foregoing fault convergence process is complex, time-consuming, and inefficient.

### SUMMARY

This application discloses a path determining method and apparatus, to implement fast path selection in an ECMP cascading scenario, reduce consumption of path switching time, and improve efficiency and accuracy of path selection.

According to a first aspect, this application provides a path determining method. A network device receives a packet. The network device selects a target path from a plurality of equal-cost paths in a first group of ECMP entries in a forwarding table based on a first equal-cost multi-path ECMP identifier, and forwards the packet based on the target path. The first ECMP identifier indicates that at least one valid equal-cost path exists in the plurality of equal-cost paths in the first group of ECMP entries. The first group of ECMP entries is a last-level ECMP entry in a plurality of levels of ECMP entries in the forwarding table.

The network device may be a head node or a transit node in a packet forwarding path. For example, the head node may be a label edge router (label edge router, LER) in a multiprotocol label switching (Multiprotocol Label Switching, MPLS) network, and the transit node may be a label switching router (label switching router, LSR) in the MPLS network.

The forwarding table may also be referred to as a forwarding information base (Forwarding Information Base, FIB). The last-level ECMP entry in the forwarding table is an ECMP entry of one level finally found by the network device in the forwarding table based on a destination address (for example, a destination IP address) of the packet. A label corresponding to an equal-cost path in the last-level ECMP entry is a label closest to a layer 2 header (L2 header) during packet encapsulation.

In the foregoing method, an ECMP identifier of each group of ECMP entries in each level of ECMP entries in the forwarding table may be used to determine whether the valid equal-cost path exists in the group of ECMP entries. In this way, whether an equal-cost path in the group of ECMP entries is available for selection is known. This can implement fast path selection in an ECMP cascading scenario, and improve path selection efficiency. In addition, compared with a path selection method that is used when a path is faulty in a current ECMP cascading scenario, an operation of switching entry content and removing a faulty path does not need to be performed. In this way, time that is consumed for entry switching is saved, and a normal path can be quickly switched to based on an ECMP identifier of an ECMP entry, to improve the path selection efficiency.

Optionally, the target path is any valid equal-cost path in the plurality of equal-cost paths in the first group of ECMP entries.

Validity of each equal-cost path in the first group of ECMP entries may be indicated by an identifier of the equal-cost path. Specifically, an equal-cost path i is used as an example. When an identifier of the equal-cost path i is a first value (for example, " 1"), the identifier indicates that the equal-cost path i is valid, in other words, the equal-cost path i is a non-faulty path and the equal-cost path i is available. When the identifier of the equal-cost path i is a second value (for example, "0"), the identifier indicates that the equal-cost path i is invalid, in other words, the equal-cost path i is faulty and the equal-cost path i is unavailable. In some possible embodiments, a bit mapping manner may alternatively be used for the identifier of the equal-cost path i, to indicate whether the equal-cost path i is valid.

In the foregoing implementation, the validity of each equal-cost path in the first group of ECMP entries may be directly indicated via an identifier. In this way, when an equal-cost path in the first group of ECMP entries is faulty, an identifier of the equal-cost path is marked as invalid, and there is no need to perform switching between an entry of the faulty path and an entry of another valid equal-cost path in the first group of ECMP entries to remove the faulty path. This saves time that is consumed in entry switching, and helps improve selection efficiency of the target path.

Optionally, the forwarding table further includes a second group of ECMP entries, and the second group of ECMP entries is an upper-level ECMP entry of the first group of ECMP entries. A second ECMP identifier of the second group of ECMP entries indicates that at least one group of valid lower-level ECMP entries exists in a plurality of groups of lower-level ECMP entries cascaded with the second group of ECMP entries. Before the network device selects the target path, the method further includes: determining whether the first ECMP identifier of the first group of ECMP entries is valid.

In the foregoing implementation, when a previous-level ECMP entry (for example, the second group of ECMP entries) of the first group of ECMP entries exists in the forwarding table, and it is found, based on the forwarding table, that the first ECMP identifier of the first group of ECMP entries cascaded under the second group of ECMP entries is valid, the target path may be further selected from the first group of ECMP entries, so that fast and direct path selection is implemented. This helps improve efficiency and accuracy of path selection in an ECMP cascading scenario.

Optionally, the plurality of groups of lower-level ECMP entries cascaded with the second group of ECMP entries further include a third group of ECMP entries, and a third ECMP identifier of the third group of ECMP entries indicates that a plurality of equal-cost paths that are included in the third group of ECMP entries are all invalid.

In the foregoing implementation, when a previous-level ECMP entry of the first group of ECMP entries exists in the forwarding table, it is learned, from the forwarding table, that the plurality of groups of lower-level ECMP entries cascaded with the second group of ECMP entries include the first group of ECMP entries and a third group of ECMP entries, and the third ECMP identifier of the third group of ECMP entries indicates that the third group of ECMP entries is invalid. In this way, the network device does not select a path from the third group of ECMP entries, but selects a path from other valid lower-level ECMP entries cascaded with the second group of ECMP entries. This helps improve efficiency and accuracy of path selection in an ECMP cascading scenario.

Optionally, each equal-cost path in the last-level ECMP entry corresponds to one segment routing traffic engineering tunnel SR_TE tunnel label, and each group of lower-level ECMP entries cascaded with the second group of ECMP entries corresponds to one private network label.

When a plurality of equal-cost paths exist in the first group of ECMP entries, SR_TE tunnel labels corresponding to different equal-cost paths may be the same or may be different, which is not specifically limited herein. It should be noted that the SR TE tunnel label and the private network label are generated by the network device in a route advertisement process. The network device may find, based on a destination address of the received packet, an ECMP entry corresponding to the destination address in the forwarding table, to obtain a label corresponding to the corresponding ECMP entry.

The private network label may be a label of a virtual private network (virtual private network, VPN) instance.

In some possible embodiments, each equal-cost path in the last-level ECMP entry corresponds to one label distribution protocol LDP label, and each group of lower-level ECMP entries cascaded with the second group of ECMP entries corresponds to one private network label. For example, the network device may be a head node in an MPLS VPN scenario.

In some possible embodiments, each equal-cost path in the last-level ECMP entry corresponds to one SR_TE tunnel label, and each group of lower-level ECMP entries cascaded with the second group of ECMP entries may not correspond to a label. For example, the network device may be a transit node on which a plurality of tunnels are deployed in a VPN over LDP over SR-TE scenario.

In the foregoing implementation, for a plurality of levels of ECMP in the forwarding table, ECMP entries of different levels may correspond to different types of labels, and the label types include but are not limited to an SR TE tunnel label, a private network label, and the like. Therefore, this method may be applied to different ECMP cascading scenarios, which helps improve applicability of the method.

For example, the network device may find a corresponding label in the forwarding table based on the destination address of the packet, to encapsulate the packet. For example, the network device finds a first-level ECMP in the forwarding table based on a destination IP address of the packet, for example, the second group of ECMP entries. A private network label 1 is first obtained from the second group of ECMP entries. The private network label 1 corresponds to the destination address of the packet. Further, the first group of ECMP entries cascaded under the second group of ECMP entries is determined based on the forwarding table, and an SR TE tunnel label 2 corresponding to an equal-cost path is obtained from the first group of ECMP entries. Because the first group of ECMP entries is the last-level ECMP entry in the plurality of levels of ECMP entries in the forwarding table, label search ends, and a label for encapsulating the packet includes the SR_TE tunnel label 2 and the private network label 1. The SR_TE tunnel label 2 is an outer label of the packet, and the private network label 1 is an inner label of the packet.

Optionally, the forwarding table further includes a fourth group of ECMP entries, and the fourth group of ECMP entries is an upper-level ECMP entry of the second group of ECMP entries. A fourth ECMP identifier of the fourth group of ECMP entries indicates that at least one group of valid lower-level ECMP entries exists in a plurality of groups of lower-level ECMP entries cascaded with the fourth group of ECMP entries. Before the determining whether the first ECMP identifier is valid, the method further includes: determining whether the second ECMP identifier of the second group of ECMP entries is valid.

In the foregoing implementation, when a previous-level ECMP entry (for example, the fourth group of ECMP entries) of the second group of ECMP entries exists in the forwarding table, only when it is found, based on the forwarding table, that the second ECMP identifier of the second group of ECMP entries cascaded under the fourth group of ECMP entries is valid, whether the first ECMP identifier of the first group of ECMP entries cascaded under the second group of ECMP entries is valid is further checked. The target path is selected from the first group of ECMP entries only when the first ECMP identifier is valid, so that fast and direct path selection is implemented, and efficiency and accuracy of path selection in an ECMP cascading scenario are improved.

Optionally, the plurality of groups of lower-level ECMP entries cascaded with the fourth group of ECMP entries further include a fifth group of ECMP entries, and a fifth ECMP identifier of the fifth group of ECMP entries indicates that a plurality of groups of lower-level ECMP entries cascaded with the fifth group of ECMP entries are all invalid.

In the foregoing implementation, when a previous-level ECMP entry (for example, the fourth group of ECMP entries) of the second group of ECMP entries exists in the forwarding table, it is learned, from the forwarding table, that the plurality of groups of lower-level ECMP entries cascaded with the fourth group of ECMP entries include the second group of ECMP entries and the fifth group of ECMP entries, and the fifth ECMP identifier of the fifth group of ECMP entries indicates that the fifth group of ECMP entries is invalid. In this way, the network device does not select a path from the fifth group of ECMP entries, but further searches for another valid lower-level ECMP entry cascaded with the fourth group of ECMP entries, for example, the second group of ECMP entries, and further searches the second group of ECMP entries until the last-level ECMP entry (for example, the first group of ECMP entries) in the forwarding table is found to determine the target path. This helps improve efficiency and accuracy of path selection in an ECMP cascading scenario.

Optionally, each equal-cost path in the last-level ECMP entry corresponds to one segment routing traffic engineering tunnel SR_TE tunnel label, each group of lower-level ECMP entries cascaded with the second group of ECMP entries corresponds to one label distribution protocol LDP label, and each group of lower-level ECMP entries cascaded with the fourth group of ECMP entries corresponds to one private network label.

For the last-level ECMP entry in the forwarding table, for example, the plurality of equal-cost paths in the first group of ECMP entries, SR TE tunnel labels corresponding to different equal-cost paths may be the same or may be different. This is not specifically limited herein. For each group of lower-level ECMP entries cascaded with the second group of ECMP entries, LDP labels corresponding to different lower-level ECMP entries may be the same or may be different. This is not specifically limited herein.

In addition, the SR_TE tunnel label, the LDP label and the private network label are generated by the network device in a route advertisement process. The network device may find, based on a destination address of the received packet, an ECMP entry corresponding to the destination address in the forwarding table, to obtain a label corresponding to the corresponding ECMP entry.

In the foregoing implementation, for a plurality of levels of ECMP in the forwarding table, ECMP entries of different levels may correspond to different types of labels, and the label types include but are not limited to an SR_TE tunnel label, an LDP label, a private network label, and the like. Therefore, this method may be applied to different ECMP cascading scenarios, which helps improve applicability of the method.

According to a second aspect, this application provides a path determining apparatus. The apparatus may be a network device or a part of the network device. The apparatus is configured to perform the method in any one of the first aspect or the possible designs of the first aspect. Specifically, the apparatus includes a unit configured to perform the method in any one of the first aspect or the possible designs of the first aspect. The unit may be a hardware unit, a software unit, or a combination of a hardware unit and a software unit. The unit may be one unit or a plurality of units obtained through division based on functions.

According to a third aspect, this application provides a network device. The network device includes a memory and a processor. The memory is configured to store a forwarding table. The forwarding table includes a plurality of levels of ECMP entries. Each level of ECMP entries in the plurality of levels of ECMP entries includes at least one group of ECMP entries. Each group of ECMP entries corresponds to one ECMP identifier. The ECMP identifier indicates whether a valid equal-cost path exists in a corresponding group of ECMP entries. The memory is further configured to store instructions. The processor is configured to invoke the instructions, so that an apparatus performs the method in any one of the first aspect or the possible implementations of the first aspect.

The network device may be a router, a switch, or the like, or may be a component that can implement the method in any one of the first aspect or the possible implementations of the first aspect and that is used in the network device, for example, a board, a chip, or a line card.

According to a fourth aspect, this application provides a computer-readable storage medium, including computer instructions. When the computer instructions are run by a processor, the method in any one of the first aspect or the possible implementations of the first aspect is implemented.

According to a fifth aspect, this application provides a computer program product. When the computer program product is executed by a processor, the method in any one of the first aspect or the possible embodiments of the first aspect is implemented. The computer program product may be, for example, a software installation package. When the method provided in any one of the possible designs of the first aspect needs to be used, the computer program product may be downloaded and executed on the processor, to implement the method in any one of the first aspect or the possible embodiments of the first aspect.

### BRIEF DESCRIPTION OF DRAWINGS

FIG. 1 is a hardware architecture diagram according to an embodiment of this application;
FIG. 2 is a schematic diagram of an application scenario according to an embodiment of this application;
FIG. 3 is a schematic diagram of another application scenario according to an embodiment of this application;
FIG. 4 is a schematic diagram of three-level ECMP cascading according to an embodiment of this application;
FIG. 5A is a schematic diagram of a structure of three-level ECMP cascading according to an embodiment of this application;
FIG. 5B is a schematic diagram of a structure of another three-level ECMP cascading according to an embodiment of this application;
FIG. 6 is a flowchart of a path determining method according to an embodiment of this application;
FIG. 7 is a flowchart of another path determining method according to an embodiment of this application;
FIG. 8 is a schematic diagram of a structure of a network device according to an embodiment of this application; and
FIG. 9 is a schematic diagram of a structure of a network device according to an embodiment of this application.

### DESCRIPTION OF EMBODIMENTS

The terms used in embodiments of this application are merely for a purpose of illustrating specific embodiments, and are not intended to limit this application. In the specification and claims in embodiments of this application, the terms "first", "second", and the like are intended to distinguish between different objects but do not indicate a particular order of the objects.

For ease of understanding, the following first describes related terms that may be used in embodiments of this application.

### (1) Equal-cost multi-path

Equal-cost multi-path (equal-cost multi-path, ECMP) may also be referred to as equal-cost route or equal-cost route. ECMP is that there are a plurality of paths with a same cost and to a same destination address. When a device supports the equal-cost route, Layer 3 forwarding traffic sent to a destination IP address or a destination network segment can be shared by different paths to implement network load balancing. When some of the paths are faulty, another path is used to perform forwarding processing, and route redundancy backup function is implemented. Compared with a conventional routing technology in which only one link can be used to transmit data packets to a destination address, ECMP can effectively increase a transmission bandwidth and back up data transmission on a failed link without delay or packet loss.

### (2) Multiprotocol label switching

Multiprotocol label switching (Multiprotocol Label Switching, MPLS) uses a label distribution protocol (Label Distribution Protocol, LDP) to allocate a label (label) to a network segment, establish a label forwarding table, replace Layer 3 routing forwarding with label forwarding, and improve forwarding efficiency.

In an MPLS network, a node at a network edge is referred to as a label edge router (label edge router, LER), and a core node of the network is referred to as a label switching router (label switching router, LSR). The LER is used to forward a data packet into an MPLS domain or to guide an IP packet to leave the MPLS domain. The LSR is used to forward a labeled data packet. A path between MPLS nodes is referred to as a label switched path (label switched path, LSP). One LSP can be considered as a unidirectional tunnel that traverses a network. An LSP is a unidirectional path, and is in a same direction as a data stream. An ingress LER of the LSP is referred to as an ingress (ingress) node, an LSR in the middle of the LSP is referred to as a transit (transit) node, and an egress LER of the LSP is referred to as an egress (egress).

In the LER, the MPLS uses a forwarding equivalence class (forwarding equivalence class, FEC) to map an input data stream to one LSP. The FEC defines a group of data streams that are along a same path and have a same processing process. After a data packet is allocated to one FEC, the LER may allocate a unique label to the FEC based on a label information base (Label Information Base, LIB) and map each FEC to a label of a next hop of the LSP.

### (3) Segment routing-traffic engineering

Segment routing-traffic engineering (Segment Routing-Traffic Engineering, SR-TE) is a new TE tunnel technology that uses segment routing or SR-MPLS as a control protocol, and greatly simplifies a traffic configuration process. An SR-TE tunnel (Tunnel) can be used for traffic optimization.

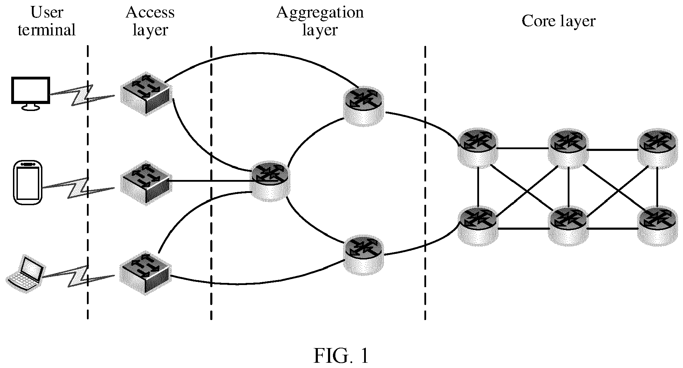

FIG. 1 is a hardware architecture diagram according to an embodiment of this application. As shown in FIG. 1, the hardware architecture diagram may include an access layer, an aggregation layer, and a core layer.

The core layer is a high-speed switching backbone of the network and plays a critical role in connectivity of the entire network. A main purpose of the core layer is to provide an optimized and reliable backbone transmission structure through high-speed forwarding communication. Therefore, a network device at the core layer has comparatively high reliability and a comparatively large throughput. Generally, the core layer uses a network device with comparatively high bandwidth.

The aggregation layer, located between the access layer and the core layer, is responsible for processing all traffic from the access layer and providing a link between the access layer and the core layer.

The access layer is a part for a user to directly connect to or access the network, and a purpose of the access layer is to allow a user terminal to connect to the network.

A transport network shown in FIG. 1 includes a plurality of network devices. Data exchange between a user terminal and a backbone network or data exchange between user terminals may be implemented through forwarding operations between the plurality of network devices.

In network devices included in the transport network shown in FIG. 1, a network device located at the core layer may be a provider (provider) device (P device for short). The P device has a powerful switching capability and may be used for high-speed switching of a data stream. A network device located at the aggregation layer may be a provider edge (provider edge, PE) device, and the PE device may be configured to implement a connection between the access layer and the core layer, and is a most important network device. A data stream flows to the access layer by using the PE device, or flows to the core layer by using the PE device. A network device located at the access layer may be a customer edge (customer edge, CE) device. The CE device is configured to provide an access service for a user terminal.

As described above, data exchange between a user terminal and a backbone network or data exchange between user terminals may be implemented through forwarding operations between the plurality of network devices. To be specific, in a scenario shown in FIG. 1, each network device is for packet forwarding, a data stream of a user terminal may be forwarded to a backbone network through a CE device to a PE device to a P device, and a data stream of a backbone network may also be forwarded to the user terminal through the P device to the PE device to the CE device.

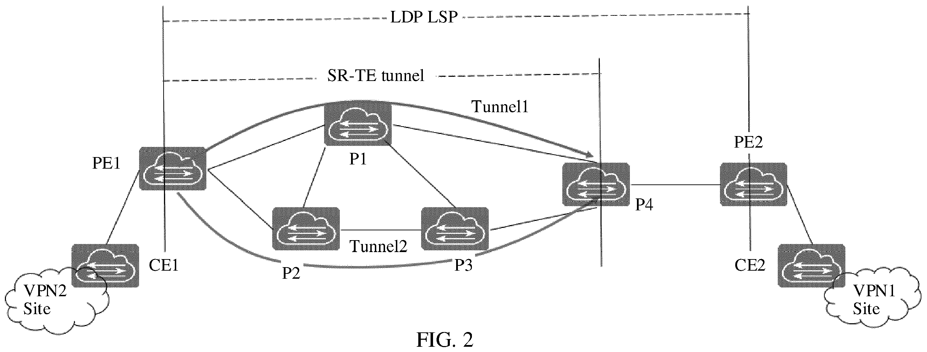

Based on the hardware architecture diagram shown in FIG. 1, refer to FIG. 2. An embodiment of this application provides a schematic diagram of an application scenario. In FIG. 2, a device CE1 and a device CE2 may be user-side devices. A device PE1 and a device PE2 may be located at an access layer. A device P1, a device P2, and a device P3 may be located at an aggregation layer. A device P4 may be located at a core layer.

For example, the application scenario may be VPN over LDP over SR-TE.

Specifically, virtual private networks (virtual private networks, VPNs) are first respectively deployed on the device CE1 and the device CE2, and a VPN is a private network constructed by using a public network. In FIG. 2, different VPN instances are deployed on the device CE1 and the device CE2. A VPN1 is deployed on the device CE2, and a VPN2 is deployed on the device CE1. Then, an LDP is deployed in an area between the device PE1 and the device PE2, so that VPN services on both ends can combine different branches of the private network through the LSP, to form a unified network. Finally, an SR-TE tunnel is deployed in a core area between the device PE1 and the device P4. As shown in FIG. 2, two tunnels, namely, Tunnel1 and Tunnel2, are deployed between the device PE1 and the device P4. This avoids establishing a fully connected SR-TE tunnel between the PE1 and the PE2, to simplify deployment and maintenance of the entire network and reduce pressure of the PE device. In addition, advantages of the SR-TE tunnel in protective switchover and path planning can be fully utilized in a core area of the network.

In a VPN over LDP over SR-TE scenario, the device PE1 is used as an example. After the device PE1 receives a packet from the device CE1, the device PE1 searches a forwarding table of the device PE1, and adds three layers of labels to the packet based on a destination address of the packet. An outermost label is an SR TE tunnel label, and indicates one tunnel from the device PE1 to the device P4. A middle label is an LDP label, and indicates transmitting the packet from the device P4 to the device PE2. An inner label is a private network label corresponding to a VPN instance, and indicates that the packet should reach the VPN1 of the CE2. In other words, the packet is forwarded from the device PE1 to the device P4 based on a tunnel label, the packet is forwarded from the device P4 to the device PE2 based on an LDP label, and the packet is forwarded from the device PE2 to the device CE2 based on a private network label.

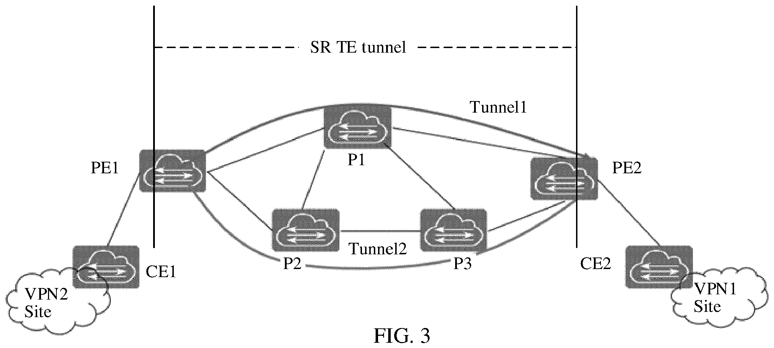

Based on the hardware architecture diagram shown in FIG. 1, refer to FIG. 3. An embodiment of this application further provides a schematic diagram of an application scenario. In FIG. 3, a device CE1 and a device CE2 may be user-side devices. A device PE1 and a device PE2 may be located at the foregoing access layer. A device P1, a device P2, and a device P3 may be located at the foregoing aggregation layer.

Specifically, VPNs are first respectively deployed on the device CE1 and the device CE2, and a VPN is a private network constructed by using a public network. In FIG. 3, different VPN instances are deployed on the device CE1 and the device CE2. A VPN1 is deployed on the device CE2, and a VPN2 is deployed on the device CE1. Then, a fully connected SR-TE tunnel is deployed between the device PE1 and the device PE2. As shown in FIG. 3, two tunnels, namely, Tunnel1 and Tunnel2, are deployed between the device PE1 and the device PE2.

The device PE1 is used as an example. After the device PE1 receives a packet from the device CE1, the device PE1 searches a forwarding table of the device PE1, and adds two layers of labels to the packet based on a destination address of the packet. An outer label is an SR TE tunnel label, and indicates one tunnel from the device PE1 to the device PE2. An inner label is a private network label corresponding to a VPN instance, and indicates that the packet should reach the VPN1 of the CE2. In other words, the packet is forwarded from the device PE1 to the device PE2 based on a tunnel label, and the packet is forwarded from the device PE2 to the device CE2 based on a private network label.

For the application scenario shown in FIG. 2 or FIG. 3, to increase network bandwidth and improve packet forwarding efficiency between nodes, ECMP may be set on a node. The ECMP may not only implement load sharing, but also provide a redundancy backup capability for the network. The VPN over LDP over SR-TE scenario shown in FIG. 2 is used as an example, It is assumed that a PE1 node generates a forwarding table (Forwarding Info Base, FIB) in a route advertisement process of each node in FIG. 2, and the forwarding table includes three-level ECMP cascading information, where ECMP entries of different levels may correspond to different types of labels, and label types include a tunnel label, an LDP label, and a private network label.

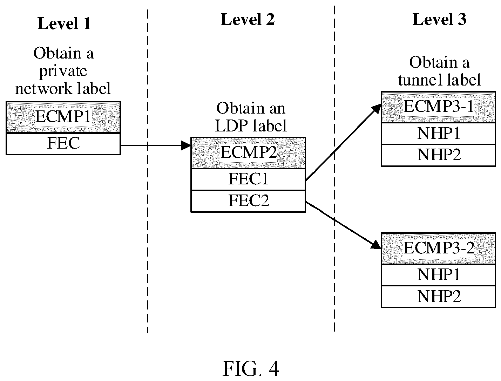

It is assumed that the three-level ECMP cascading information found by the PE1 node based on the forwarding table may be represented in a form shown in FIG. 4.

First, the forwarding table is searched based on a destination address of a packet received by the PE1 node, and a private network label is obtained from ECMP1 in level-1 type ECMP in the forwarding table, where the private network label corresponds to the destination address of the received packet. Further, the ECMP1 includes one member FEC, and the FEC points to ECMP2, where the ECMP2 is level-2 type ECMP. That is, the ECMP1 is cascaded with the ECMP2 through the FEC.

The level-2 type ECMP includes the ECMP2, and the ECMP2 includes two members, namely, an FEC1 and an FEC2. The FEC1 points to ECMP3-1 in a level-3 type, and the FEC2 points to ECMP3-2 in the level-3 type. In other words, the ECMP2 is cascaded with the ECMP3-1 through the FEC1, the ECMP2 is cascaded with the ECMP3-2 through the FEC2, and an LDP label corresponding to the ECMP3-1 and an LDP label corresponding to the ECMP3-2 may be obtained based on the ECMP2.

The level-3 type ECMP includes the ECMP3-1 and the ECMP3-2, where the ECMP3-1 represents Tunnel1 in FIG. 2, and the ECMP3-2 represents Tunnel2 in FIG. 2. If ECMP is also used inside Tunnel1 and Tunnel2, it is assumed that the ECMP3-1 includes two members, namely, NHP1 and NHP2. This means that Tunnel1 has two equal-cost paths. It is assumed that the ECMP3-2 also includes two members, namely, NHP1 and NHP2. This means that Tunnel2 has two equal-cost paths. In addition, a tunnel label corresponding to Tunnel1 may be obtained based on the ECMP3-1, and a tunnel label corresponding to Tunnel2 may be obtained based on the ECMP3-2.

Based on FIG. 4, when a member of ECMP of a level is faulty, for example, when the NHP1 of the ECMP3-1 of a lowest level is faulty, because the ECMP3-1 has two NHP members, to ensure continuity of sequence numbers of valid NHPs, content of the NHP1 and the NHP2 in the ECMP3-1 needs to be exchanged through a control plane and content of the NHP2 needs to be deleted. Then an ECMP3-1 entry that excludes the NHP2 is delivered to a forwarding plane (because the faulty NHP1 has been exchanged with the NHP2), to enable the PE1 to reselect a route. Because content of the NHP1 of the ECMP3-1 has been updated to the content of the NHP2 of the ECMP3-1, if the last member NHP1 of the ECMP3-1 is faulty, the ECMP3-1 has no available member, which means that the ECMP3-1 is invalid. In this case, the control plane needs to exchange content of the ECMP3-1 and content of the ECMP3-2, delete the ECMP3-2, and then redeliver a related entry to the forwarding plane again, to enable the PE1 to reselect a route. It can be learned that, when each level of ECMP has a plurality of members, if a member is faulty, operations such as content exchange need to be performed on an entry for a plurality of times to correctly select a path to switch traffic to a non-faulty link. However, this process is time-consuming and network path selection efficiency is low.

For the foregoing problem, an embodiment of this application provides a path determining method, so that in an ECMP cascading scenario, when a member at a level of the ECMP is faulty or a level of the ECMP is faulty, correct path selection can be quickly implemented based on a set ECMP identifier, to save entry switching time, and improve path selection efficiency.

The following describes technical solutions of this application with reference to accompanying drawings.

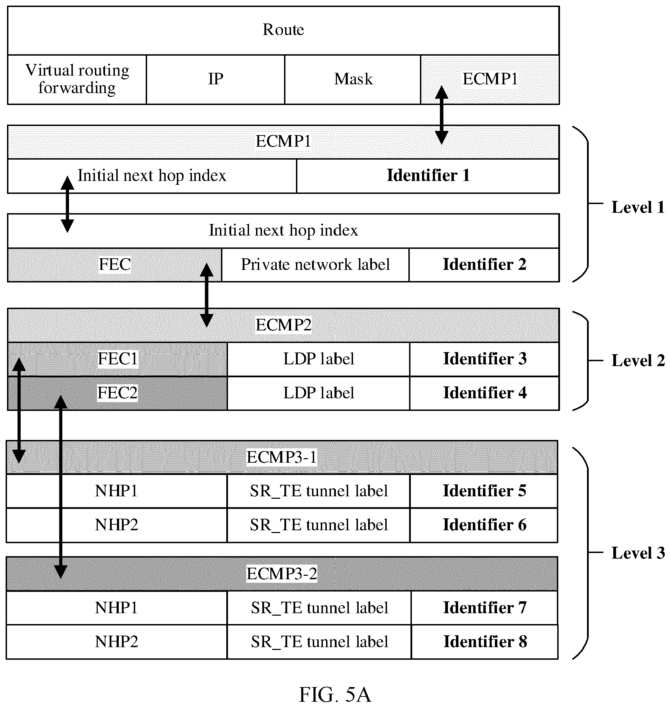

FIG. 5A is a schematic diagram of a structure of three-level ECMP cascading according to an embodiment of this application. It should be noted that FIG. 5A shows a forwarding table (Forwarding Info Base, FIB) of a PE1 in a VPN over LDP over SR-TE scenario. In the forwarding table, identifiers are respectively set for each group of ECMP and each member in each group of ECMP. The identifier corresponding to each group of ECMP indicates whether the group of ECMP is valid, and the identifier corresponding to the member in each group of ECMP indicates whether the member in the group of ECMP is valid. For a relationship between validity of each group of ECMP and validity of each member in the group of ECMP, refer to related descriptions below.

Specifically, because the PE1 is a head node of a packet forwarding path, in addition to three-level ECMP cascading information, the forwarding table further includes the following information: a route (route), a virtual routing forwarding (virtual routing forwarding, VRF) instance, an IP address, a mask (mask), and the like. The forwarding table shown in FIG. 5A includes a plurality of levels of ECMP. The plurality of levels of ECMP are classified into level-1 type ECMP, level-2 type ECMP, and level-3 type ECMP. The level-3 type ECMP is a last-level ECMP entry in the plurality of levels of ECMP, the level-2 type ECMP is a previous-level ECMP entry of the level-3 type ECMP, and the level-1 type ECMP is a previous-level ECMP entry of the level-2 type ECMP. The following specifically describes an ECMP entry of each level.

The level-1 type ECMP includes an ECMP1 entry, and an identifier 1 is set for indicating validity of the ECMP1 entry. The ECMP1 entry includes one FEC member, and the FEC member points to an ECMP2 entry of a next level, in other words, the ECMP1 entry is cascaded with the lower-level ECMP2 entry. In addition, the forwarding table further includes a private network label corresponding to the ECMP2 entry.

The level-2 type ECMP includes the ECMP2 entry, and an identifier 2 is set for indicating validity of the ECMP2 entry. Specifically, the ECMP2 entry includes two FEC members, namely, an FEC1 and an FEC2. The FEC1 points to ECMP3-1 of a next level, and the FEC2 points to ECMP3-2 of the next level. In other words, the ECMP2 entry is separately cascaded with an ECMP3-1 entry and an ECMP3-2 entry that are at a lower level. In addition, the forwarding table further includes an LDP label corresponding to the ECMP3-1 entry and an LDP label corresponding to the ECMP3-2 entry.

The level-3 type ECMP includes the ECMP3-1 entry and the ECMP3-2 entry, where an identifier 3 is set for indicating validity of the ECMP3-1 entry and an identifier 4 is set for indicating validity of the ECMP3-2 entry. For meanings of the ECMP3-1 entry and the ECMP3-2 entry, refer to descriptions of the ECMP3-1 and the ECMP3-2 in FIG. 4, and details are not described herein again.

The ECMP3-1 entry includes two NHP members (namely, NHP1 and NHP2), in other words, two equal-cost paths. An identifier 5 is set for indicating validity of the member NHP1 in the ECMP3 -1, and an identifier 6 is set for indicating validity of the member NHP2 in the ECMP3 -1. In addition, the forwarding table further includes an SR_TE tunnel label corresponding to each equal-cost path in the ECMP3-1 entry.

The ECMP3-2 entry includes two NHP members (namely, NHP1 and NHP2), in other words, two equal-cost paths. An identifier 7 is set for indicating validity of the member NHP1 in the ECMP3-2, and an identifier 8 is set for indicating validity of the member NHP2 in the ECMP3 -2. In addition, the forwarding table further includes an SR_TE tunnel label corresponding to each equal-cost path in the ECMP3-2 entry.

In this embodiment of this application, validity of each group of ECMP entries in the forwarding table relates to validity of each member in the group of ECMP entries.

The ECMP3-1 entry in the last-level ECMP entry is used as an example. When the identifier 3 indicates that the ECMP3-1 entry is valid, it indicates that at least one valid equal-cost path exists in a plurality of equal-cost paths in the ECMP3-1 entry. The following three cases are specifically included: (1) Both the NHP1 and the NHP2 in the ECMP3-1 entry are valid, to be specific, the identifier 5 indicates that the NHP1 in the ECMP3-1 entry is valid and the identifier 6 indicates that the NHP2 in the ECMP3-1 entry is valid. (2) Only the NHP1 in the ECMP3-1 entry is valid, to be specific, the identifier 5 indicates that the NHP1 in the ECMP3-1 entry is valid but the identifier 6 indicates that the NHP2 in the ECMP3-1 entry is invalid. (3) Only the NHP2 in the ECMP3-1 entry is valid, to be specific, the identifier 6 indicates that the NHP2 in the ECMP3-1 entry is valid but the identifier 5 indicates that the NHP1 in the ECMP3-1 entry is invalid. When the identifier 3 indicates that the ECMP3 -1 entry is invalid, it indicates that the plurality of equal-cost paths included in the ECMP3-1 entry are all invalid. Therefore, the identifier 5 indicates that the NHP1 in the ECMP3-1 entry is invalid, and the identifier 6 indicates that the NHP2 in the ECMP3 -1 entry is invalid.

A level-2 type ECMP2 entry is used as an example. When the identifier 2 indicates that the ECMP2 entry is valid, it indicates that at least one group of valid lower-level ECMP entries exists in a plurality of groups of lower-level ECMP entries cascaded with the ECMP2 entry. The following three cases are specifically included: (1) Both the ECMP3-1 and the ECMP3-2 are valid, to be specific, the identifier 3 indicates that the ECMP3-1 entry is valid and the identifier 4 indicates that the ECMP3-2 entry is valid. (2) Only the ECMP3-1 is valid, to be specific, the identifier 3 indicates that the ECMP3-1 entry is valid but the identifier 4 indicates that the ECMP3-2 entry is invalid. (3) Only the ECMP3-2 is valid, to be specific, the identifier 4 indicates that the ECMP3 -2 is valid but the identifier 3 indicates that the ECMP3-1 is invalid. When the identifier 2 indicates that the ECMP2 entry is invalid, it indicates that the plurality of groups of lower-level ECMP entries cascaded with the ECMP2 entry are all invalid, to be specific, the identifier 3 indicates that the ECMP3-1 entry is invalid and the identifier 4 indicates that the ECMP3-2 entry is invalid.

It should be noted that, in this embodiment of this application, a quantity of ECMP cascading levels in the forwarding table of the network device is not limited to 3. Another quantity of ECMP cascading levels may be used. For example, when the network device is the device PE1 or the device PE2 in FIG. 3, ECMP cascading shown in the forwarding table of the network device may be two-level ECMP cascading. For another example, when the network device is the device P4 in FIG. 2, ECMP cascading shown in the forwarding table of the network device may be two-level ECMP cascading. In addition, a quantity of members in each group of ECMP is not limited in this embodiment of this application. For example, a quantity of members in a group of ECMP may alternatively be 3, 4, or another value.

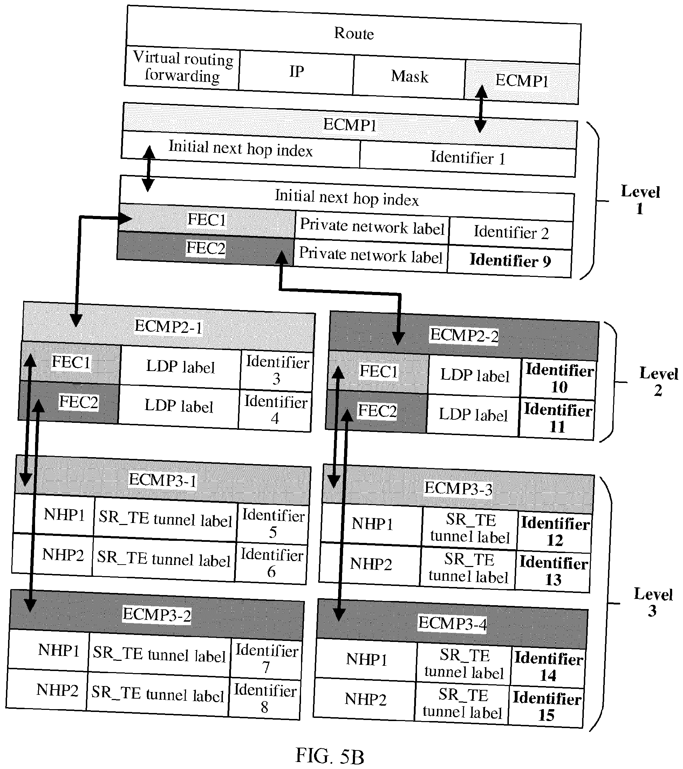

FIG. 5B is a schematic diagram of a structure of another three-level ECMP cascading according to an embodiment of this application. In FIG. 5B, level-1 type ECMP includes an ECMP1 entry. Level-2 type ECMP includes two groups of ECMP entries, namely, an ECMP2-1 entry and an ECMP2-2 entry. Level-3 type ECMP includes four groups of ECMP entries, namely, an ECMP3-1 entry, an ECMP3-2 entry, an ECMP3-3 entry, and an ECMP3-4 entry. The ECMP1 entry is separately cascaded with the ECMP2-1 entry and the ECMP2-2 entry that are at a lower level, the ECMP2-1 entry is cascaded with the lower-level ECMP3-1 entry and the lower-level ECMP3-2 entry separately, and the ECMP2-2 entry is cascaded with the lower-level ECMP3-3 entry and the lower-level ECMP3 - 4 entry separately.

Compared with the schematic diagram of a structure of three-level ECMP cascading shown in FIG. 5A, it can be learned that, the ECMP1 entry in FIG. 5A is cascaded only with the ECMP2 entry, in other words, a quantity of lower-level ECMP entries cascaded with the ECMP1 in FIG. 5A is 1. However, in FIG. 5B, the quantity of lower-level ECMP entries cascaded with the ECMP1 entry is 2. It should be noted that the ECMP2-1 entry in FIG. 5B is the ECMP2 entry in FIG. 5A. For specific descriptions of the ECMP2-1 entry and a lower-level entry cascaded with the ECMP2-1 entry, refer to related descriptions of the ECMP2 entry in FIG. 5A. Details are not described herein again.

The following specifically describes the ECMP2-2 entry and each group of lower-level ECMP entries cascaded with the ECMP2-2 entry in FIG. 5B.

An identifier 9 is set for indicating validity of the ECMP2-2 entry. The ECMP2-2 entry includes two FEC members, namely, an FEC1 and an FEC2. The FEC1 points to the ECMP3-3 entry of a lower level, and the FEC2 points to the ECMP3-4 entry of a lower level. In other words, the ECMP2-2 entry is separately cascaded with the ECMP3-3 entry and the ECMP3-4 entry that are at a lower level. In addition, the forwarding table further includes an LDP label corresponding to the ECMP3-3 entry and an LDP label corresponding to the ECMP3-4 entry.

An identifier 10 is set for indicating validity of the ECMP3-3 entry. The ECMP3-3 entry includes two NHP members (namely, NHP1 and NHP2), in other words, two equal-cost paths. An identifier 12 is set for indicating validity of the member NHP1 in the ECMP3-3, and an identifier 13 is set for indicating validity of the member NHP2 in the ECMP3-3. In addition, the forwarding table further includes an SR_TE tunnel label corresponding to each equal-cost path in the ECMP3-3 entry.

An identifier 11 is set for indicating validity of the ECMP3-4 entry. The ECMP3-4 entry includes two NHP members (namely, NHP1 and NHP2), in other words, two equal-cost paths. An identifier 14 is set for indicating validity of the member NHP1 in the ECMP3-4, and an identifier 15 is set for indicating validity of the member NHP2 in the ECMP3-4. In addition, the forwarding table further includes an SR_TE tunnel label corresponding to each equal-cost path in the ECMP3-4 entry.

It should be noted that the schematic diagrams of three-level ECMP cascading in the forwarding tables shown in FIG. 5A and FIG. 5B are merely an example. In some possible embodiments, another table, dendrogram, or the like that describes a relationship between ECMP levels and content of entries of the ECMP levels may be used. This is not specifically limited in this embodiment of this application.

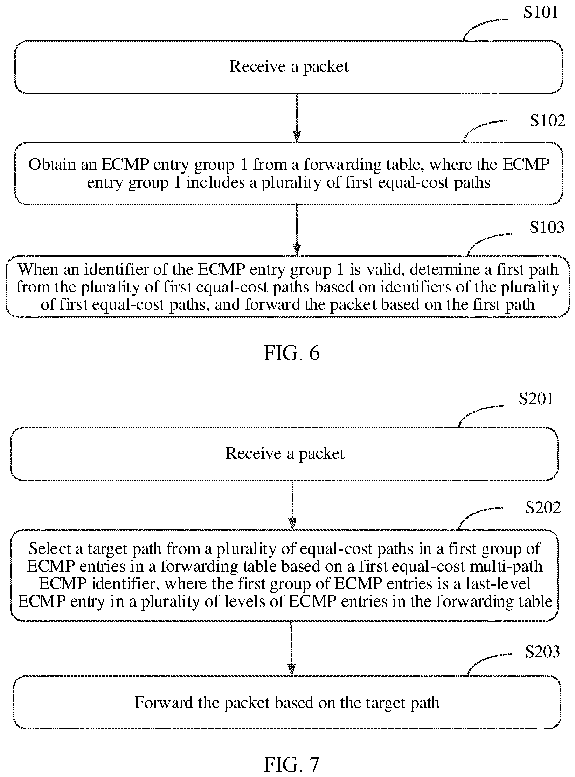

FIG. 6 is a flowchart of a path determining method according to an embodiment of this application. The method is applied to a network device in an ECMP cascading scenario. The method includes but is not limited to the following steps.

S101: Receive a packet.

In this embodiment of this application, a network device receives a packet sent by a previous node.

The network device may be a head node or a transit node in a packet forwarding path. For example, the head node may be a label edge router LER in an MPLS network, and the transit node may be a label switching router LSR in the MPLS network.

For example, in FIG. 2, when the network device is a device PE1, the previous node may be a device CE1, in other words, the device PE1 receives a packet sent by the device CE1, and the packet is forwarded by the device PE1 to a device CE2. When the network device is a device PE2, the previous node may be a device CE2, in other words, the device PE2 receives a packet sent by the device CE2, and the packet is forwarded by the device PE2 to a device CE1.

For example, in FIG. 2, when the network device is the device P4, the previous node may be the device PE2, in other words, the device P4 receives a packet sent by the device PE2, and the packet is forwarded by the device P4 to the device CE1.

S102: Obtain an ECMP entry group 1 from a forwarding table, where the ECMP entry group 1 includes a plurality of first equal-cost paths.

In this embodiment of this application, the ECMP entry group 1 is a last-level ECMP entry in a plurality of levels of ECMP entries in the forwarding table. Each first equal-cost path in the ECMP entry group 1 has a same cost.

In this embodiment of this application, the forwarding table includes an identifier of the ECMP entry group 1, and the identifier of the ECMP entry group 1 indicates validity of the ECMP entry group 1.

In this embodiment of this application, when the identifier of the ECMP entry group 1 is valid, in other words, the identifier of the ECMP entry group 1 indicates that the ECMP entry group 1 is valid, it indicates that at least one valid first equal-cost path exists in the plurality of first equal-cost paths in the ECMP entry group 1. When the identifier of the ECMP entry group 1 is invalid, in other words, the identifier of the ECMP entry group 1 indicates that the ECMP entry group 1 is invalid, it indicates that the plurality of first equal-cost paths included in the ECMP entry group 1 are all invalid.

For example, when the identifier of the ECMP entry group 1 is a first value (for example, " 1"), it indicates that the ECMP entry group 1 is valid. When the identifier of the ECMP entry group 1 is a second value (for example, "0"), it indicates that the ECMP entry group 1 is invalid. In some possible embodiments, a bit mapping manner may alternatively be used for the identifier of the ECMP entry group 1, to indicate whether the ECMP entry group 1 is valid.

In this embodiment of this application, the forwarding table further includes an identifier of each first equal-cost path in the ECMP entry group 1, and the identifier of each equal-cost path is used for validity of the first equal-cost path.

A first equal-cost path i is used as an example, and the first equal-cost path i is any one of the plurality of first equal-cost paths. When an identifier of the first equal-cost path i is valid, in other words, the identifier of the first equal-cost path i indicates that the first equal-cost path i is valid, it indicates that the first equal-cost path i is a non-faulty path and the first equal-cost path i is available. When the identifier of the first equal-cost path i is invalid, in other words, the identifier of the first equal-cost path i indicates that the first equal-cost path i is invalid, it indicates that the first equal-cost path i is faulty and the first equal-cost path i is unavailable.

For example, when the identifier of the first equal-cost path i is a first value (for example, "1"), it indicates that the first equal-cost path i is valid. When the identifier of the first equal-cost path i is a second value (for example, "0"), it indicates that the first equal-cost path i is invalid.

For example, in the foregoing FIG. 5A, the ECMP entry group 1 may be the ECMP3-1, and the first equal-cost path i may be a path corresponding to the NPH1 in the ECMP3-1. In this case, the identifier of the first equal-cost path i is the identifier 5, and the identifier of the ECMP entry group 1 is the identifier 3 in FIG. 5A.

It should be noted that the identifier of the ECMP entry group 1 in the forwarding table and the identifier of the first equal-cost path in the ECMP entry group 1 may be updated through a forwarding plane of the network device.

For example, when the forwarding plane of the network device perceives that a first equal-cost path in the ECMP entry group 1 is faulty, an identifier of the first equal-cost path is marked as invalid in the forwarding table, for example, the identifier is set to "0", to indicate that the first equal-cost path is invalid.

For example, after the forwarding plane of the network device perceives that identifiers of all first equal-cost paths in the ECMP entry group 1 are marked as invalid, the identifier of the ECMP entry group 1 is marked as invalid in the forwarding table, for example, the identifier is set to "0", to indicate that the ECMP entry group 1 is invalid.

S103: When the identifier of the ECMP entry group 1 is valid, determine a first path from the plurality of first equal-cost paths based on identifiers of the plurality of first equal-cost paths, and forward the packet based on the first path.

In this embodiment of this application, the first path is any first equal-cost path whose identifier is valid in the plurality of first equal-cost paths in the ECMP entry group 1.

In a specific implementation, when the identifier of the ECMP entry group 1 indicates that the ECMP entry group 1 is valid, a hash algorithm may be used to determine the first path from each first equal-cost path whose identifier is valid in the ECMP entry group 1. In some possible embodiments, the network device may alternatively determine, by using a polling policy or based on a path weight, the first path from each first equal-cost path whose identifier is valid in the ECMP entry group 1. This is not specifically limited in this embodiment of this application.

For example, in FIG. 5A, it is assumed that the ECMP entry group 1 is the ECMP3-1. When the identifier 3 is valid, if both the identifier 5 corresponding to the NHP1 in the ECMP3 -1 and the identifier 6 corresponding to the NHP2 in the ECMP3-1 are valid, a path corresponding to the NHP1 or a path corresponding to the NHP2 in the ECMP3-1 may be selected as the first path. For another example, in FIG. 5A, if the identifier 3 is valid, the identifier 5 is invalid, and the identifier 6 is valid, a path corresponding to the NHP2 is selected as the first path.

In some possible embodiments, the forwarding table further includes an ECMP entry group 2. The ECMP entry group 2 is an upper-level ECMP entry of the ECMP entry group 1, the forwarding table further includes an identifier of the ECMP entry group 2, and the identifier of the ECMP entry group 2 indicates validity of the ECMP entry group 2. Specifically, when the identifier of the ECMP entry group 2 is valid, it indicates that the ECMP entry group 2 is valid; or when the identifier of the ECMP entry group 2 is invalid, it indicates that the ECMP entry group 2 is invalid.

The validity of the ECMP entry group 2 relates to validity of each group of ECMP entries in a plurality of groups of lower-level ECMP entries cascaded with the ECMP entry group 2. Specifically, that the ECMP entry group 2 is valid means that at least one group of ECMP entries whose identifier is valid exists in the plurality of groups of lower-level ECMP entries cascaded with the ECMP entry group 2; and that the ECMP entry group 2 is invalid means that the plurality of groups of lower-level ECMP entries cascaded with the ECMP entry group 2 are all invalid.

In this embodiment of this application, when an upper-level ECMP entry of the ECMP entry group 1 exists in the forwarding table, the method further includes: when the identifier of the ECMP entry group 1 is invalid, determining a second path based on the ECMP entry group 2, and forwarding the packet based on the second path.

In a specific implementation, the determining a second path based on the ECMP entry group 2 includes: when the identifier of the ECMP entry group 2 is valid, selecting, based on identifiers of the plurality of groups of lower-level ECMP entries cascaded with the ECMP entry group 2, an ECMP entry group 3 from the plurality of groups of lower-level ECMP entries cascaded with the ECMP entry group 2, where the ECMP entry group 3 is any group of ECMP entries whose identifier is valid in the plurality of groups of lower-level ECMP entries cascaded with the ECMP entry group 2; and determining the second path from a plurality of second equal-cost paths based on identifiers of the plurality of second equal-cost paths in the ECMP entry group 3.

An identifier of each group of lower-level ECMP entries cascaded with the ECMP entry group 2 indicates validity of the group of lower-level ECMP entries. An identifier of each second equal-cost path indicates validity of the second equal-cost path. The second path is any second equal-cost path whose identifier is valid in the plurality of second equal-cost paths in the ECMP entry group 3.

It may be understood that if the forwarding table of the network device includes the ECMP entry group 2, two-level ECMP cascading exists in the forwarding table.

For example, based on FIG. 5A, a path selection method used when last-level ECMP is invalid in an ECMP cascading scenario is specifically described. In FIG. 5A, it is assumed that the ECMP entry group 1 is the ECMP3-1. In this case, the identifier of the ECMP entry group 1 is the identifier 3. When the identifier 3 indicates that the ECMP3-1 is invalid, the network device finds, based on the forwarding table, upper-level ECMP cascaded with the ECMP3-1, that is, the ECMP2 (where the ECMP2 is the ECMP entry group 2). Because the identifier 2 of the ECMP2 is valid, based on an identifier of each lower-level ECMP cascaded with the ECMP2, the ECMP3 -2 (where the ECMP3-2 is the ECMP entry group 3) whose identifier 4 is valid is selected from the lower-level ECMP cascaded with the ECMP2. Then any equal-cost path whose identifier is valid is selected from the NHP1 and the NHP2 in the ECMP3-2 as the second path based on an identifier of each equal-cost path in the ECMP3-2, and the packet is forwarded based on the second path.

In some possible embodiments, the forwarding table further includes an ECMP entry group 4. The ECMP entry group 4 is upper-level ECMP of the ECMP entry group 2, the forwarding table further includes an identifier of the ECMP entry group 4, and the identifier of the ECMP entry group 4 indicates validity of the ECMP entry group 4. Specifically, when the identifier of the ECMP entry group 4 is valid, it indicates that the ECMP entry group 4 is valid; or when the identifier of the ECMP entry group 4 is invalid, it indicates that the ECMP entry group 4 is invalid.

The validity of the ECMP entry group 4 relates to validity of each group of ECMP entries in a plurality of groups of lower-level ECMP entries cascaded with the ECMP entry group 4. Specifically, that the ECMP entry group 4 is valid means that at least one group of ECMP entries whose identifier is valid exists in the plurality of groups of lower-level ECMP entries cascaded with the ECMP entry group 4; and that the ECMP entry group 4 is invalid means that the plurality of groups of lower-level ECMP entries cascaded with the ECMP entry group 4 are all invalid.

In this embodiment of this application, when an upper-level ECMP entry of the ECMP entry group 2 exists in the forwarding table, the method further includes: when the identifier of the ECMP entry group 2 is invalid, determining a third path based on the ECMP entry group 4, and forwarding the packet based on the third path.

In a specific implementation, the determining a third path based on the ECMP entry group 4 includes: when the identifier of the ECMP entry group 4 is valid, selecting, based on identifiers of the plurality of groups of lower-level ECMP entries cascaded with the ECMP entry group 4, an ECMP entry group 5 from the plurality of groups of lower-level ECMP entries cascaded with the ECMP entry group 4, where the ECMP entry group 5 is any group of ECMP entries whose identifier is valid in the plurality of groups of lower-level ECMP entries cascaded with the ECMP entry group 4; selecting, based on identifiers of a plurality of groups of lower-level ECMP entries cascaded with the ECMP entry group 5, an ECMP entry group 6 from the plurality of groups of lower-level ECMP entries cascaded with the ECMP entry group 5, where the ECMP entry group 6 is any group of ECMP entries whose identifier is valid in the plurality of groups of lower-level ECMP entries cascaded with the ECMP entry group 5; and determining the third path from a plurality of third equal-cost paths based on identifiers of the plurality of third equal-cost paths in the ECMP entry group 6.

An identifier of each group of lower-level ECMP entries cascaded with the ECMP entry group 4 indicates validity of the group of lower-level ECMP entries. An identifier of each group of lower-level ECMP entries cascaded with the ECMP entry group 5 indicates validity of the group of lower-level ECMP entries. An identifier of each third equal-cost path indicates validity of the third equal-cost path. The third path is any third equal-cost path whose identifier is valid in the plurality of third equal-cost paths in the ECMP entry group 6.

It may be understood that if the forwarding table of the network device includes the ECMP entry group 4, three-level ECMP cascading exists in the forwarding table.

For example, based on FIG. 5B, a path selection method used when a group of ECMP entries of a previous level of a last level in a forwarding table is invalid in an ECMP cascading scenario is specifically described. In FIG. 5B, it is assumed that the ECMP entry group 2 is the ECMP2-1, and the identifier 2 of the ECMP2-1 obtained from the forwarding table is invalid. In this case, the network device finds, based on the forwarding table, upper-level ECMP cascaded with the ECMP2-1, that is, the ECMP1 (where the ECMP1 is the ECMP entry group 4). The identifier 1 of the ECMP1 is determined as valid. In this case, based on an identifier of each lower-level ECMP cascaded with the ECMP1, the ECMP2-2 (where the ECMP2-2 is the ECMP entry group 5) whose identifier 9 is valid is selected from the lower-level ECMP cascaded with the ECMP1. Then, based on an identifier of each lower-level ECMP cascaded with the ECMP2-2, one ECMP whose identifier is valid is selected from the lower-level ECMP cascaded with the ECMP2-2, for example, the ECMP3-3 (where the ECMP3-3 is the ECMP entry group 6) whose identifier 10 is valid is selected. Finally, any equal-cost path whose identifier is valid is selected from the NHP1 and the NHP2 in the ECMP3-3 as the third path based on an identifier of each equal-cost path in the ECMP3-3, and the packet is forwarded based on the third path.

In some possible embodiments, each group of ECMP entries in the forwarding table corresponds to a label, for packet encapsulation.

In a specific implementation, when each group of ECMP entries included in the forwarding table of the network device is in three-level ECMP cascading, each equal-cost path in the last-level ECMP entry (for example, the ECMP entry group 1) in the forwarding table corresponds to one segment routing traffic engineering tunnel SR_TE tunnel label, each group of lower-level ECMP entries cascaded with the ECMP entry group 2 corresponds to one label distribution protocol LDP label, and each group of lower-level ECMP entries cascaded with the ECMP entry group 4 corresponds to one private network label. It should be noted that the SR_TE tunnel label, the LDP label and the private network label are generated by the network device in a route advertisement process. The network device may find, based on a destination address of the received packet, an ECMP entry corresponding to the destination address in the forwarding table, to obtain a label corresponding to the corresponding ECMP entry.

For the last-level ECMP entry in the forwarding table, for example, a plurality of equal-cost paths in the ECMP entry group 1, SR TE tunnel labels corresponding to different equal-cost paths may be the same or may be different. This is not specifically limited herein. For each group of lower-level ECMP entries cascaded with the ECMP entry group 2, LDP labels corresponding to different lower-level ECMP entries may be the same or may be different. This is not specifically limited herein.

For example, when each group of ECMP entries included in the forwarding table of the network device is in three-level ECMP cascading, the network device may be the device PE1 in the VPN over LDP over SR-TE shown in FIG. 2.

In a specific implementation, when each group of ECMP entries included in the forwarding table is in two-level ECMP cascading, a label corresponding to each group of ECMP entries may be any one of the following cases.

Case 1: Each equal-cost path in the last-level ECMP entry (for example, the ECMP entry group 1) in the forwarding table corresponds to one SR_TE tunnel label, and each group of lower-level ECMP entries cascaded with the ECMP entry group 2 corresponds to one private network label. It should be noted that the SR TE tunnel label and the private network label are generated by the network device in a route advertisement process. The network device may find, based on a destination address of the received packet, an ECMP entry corresponding to the destination address in the forwarding table, to obtain a label corresponding to the corresponding ECMP entry.

For example, when the label corresponding to each group of ECMP entries in the two-level ECMP cascading scenario shown in the forwarding table of the network device is in the case 1, the network device may be the device PE2 or the device PE1 in the MPLS VPN shown in FIG. 3.

Case 2: Each equal-cost path in the last-level ECMP entry (for example, the ECMP entry group 1) in the forwarding table corresponds to one LDP tunnel label, and each group of lower-level ECMP entries cascaded with the ECMP entry group 2 corresponds to one private network label.

For example, when the label corresponding to each group of ECMP entries in the two-level ECMP cascading scenario shown in the forwarding table of the network device is in the case 2, the network device may be the device PE2 in FIG. 2. In this case, a destination address of a packet received by the network device corresponds to a private network label on the device CE1.

Case 3: When each ECMP entry group included in the forwarding table is in two-level ECMP cascading, only each equal-cost path in the last-level ECMP entry (for example, the ECMP entry group 1) in the forwarding table corresponds to one SR_TE tunnel label, and each group of lower-level ECMP entries cascaded with the ECMP entry group 2 does not correspond to a label.

For example, when the label corresponding to each group of ECMP entries in the two-level ECMP cascading scenario shown in the forwarding table of the network device is in the case 3, the network device may be the device P4 shown in FIG. 2. It can be learned from FIG. 2 that two tunnels are deployed on the device PE2, and in this case, a destination address of a packet received by the network device corresponds to a private network label on the device CE1.

It can be learned that, in this embodiment of this application, the forwarding table includes a plurality of levels of ECMP entries, and each level of ECMP entries includes at least one group of ECMP entries. One corresponding ECMP identifier is set for each group of ECMP entries to indicate whether a valid equal-cost path exists in the group of ECMP entries. In this way, when a fault occurs on an equal-cost path in a group of ECMP entries, a valid equal-cost path may be reselected based on an ECMP identifier of the group of ECMP entries, or when a plurality of equal-cost paths in a group of ECMP entries are all faulty, route reselecting is performed based on an ECMP identifier of a previous-level ECMP entry of the group of ECMP entries, to save time for exchanging entry content when a path in an ECMP entry is faulty, implement fast path switching in an ECMP cascading scenario, reduce path fault convergence time, and improve path selection efficiency.

FIG. 7 is a flowchart of another path determining method according to an embodiment of this application. The method is applied to a network device. The method includes but is not limited to the following steps.

S201: Receive a packet. For details of this step, refer to related descriptions of S101 in the embodiment in FIG. 6. For brevity of the specification, details are not described herein again.

S202: Select a target path from a plurality of equal-cost paths in a first group of ECMP entries in a forwarding table based on a first equal-cost multi-path ECMP identifier, where the first group of ECMP entries is a last-level ECMP entry in a plurality of levels of ECMP entries in the forwarding table.

The first ECMP identifier indicates that at least one valid equal-cost path exists in the plurality of equal-cost paths in the first group of ECMP entries.

The last-level ECMP entry in the forwarding table is a last-level ECMP entry found by the network device in the forwarding table based on a destination address of the packet, and a label corresponding to an equal-cost path in the last-level ECMP entry is a label closest to a layer 2 header (L2 header) during packet encapsulation.

In this embodiment of this application, the target path is any valid equal-cost path in the plurality of equal-cost paths in the first group of ECMP entries.

For example, validity of each equal-cost path in the first group of ECMP entries may be indicated by an identifier of the equal-cost path.

For example, the first group of ECMP entries may be the ECMP entry group 1 in the embodiment in FIG. 6, and the first ECMP identifier is equivalent to the identifier of the ECMP entry group 1 in FIG. 6. When the identifier of the ECMP entry group 1 indicates that the ECMP entry group 1 is valid, the target path is the first path in FIG. 6.

In some possible embodiments, the forwarding table further includes a second group of ECMP entries, and the second group of ECMP entries is an upper-level ECMP entry of the first group of ECMP entries. A second ECMP identifier of the second group of ECMP entries indicates that at least one group of valid lower-level ECMP entries exists in a plurality of groups of lower-level ECMP entries cascaded with the second group of ECMP entries. Before the selecting a target path, the method further includes: determining whether the first ECMP identifier of the first group of ECMP entries is valid.

For example, the first group of ECMP entries may be the ECMP entry group 1 in the embodiment in FIG. 6. The first ECMP identifier is equivalent to the identifier of the ECMP entry group 1 in FIG. 6. The second group of ECMP entries is equivalent to the ECMP entry group 2 in FIG. 6. The target path is the first path in FIG. 6. Before the first path is selected from the ECMP entry group 1, whether the identifier of the ECMP entry group 1 is valid needs to be first determined.

In some possible embodiments, the plurality of groups of lower-level ECMP entries cascaded with the second group of ECMP entries further include a third group of ECMP entries, and a third ECMP identifier of the third group of ECMP entries indicates that a plurality of equal-cost paths that are included in the third group of ECMP entries are all invalid.

For example, the second group of ECMP entries may be the ECMP entry group 2 in the embodiment in FIG. 6, the third group of ECMP entries is equivalent to the ECMP entry group 1 in FIG. 6, and the first group of ECMP entries is equivalent to the ECMP entry group 3 in FIG. 6. In this case, when the identifier of the ECMP entry group 1 indicates that the ECMP entry group 1 is invalid, the ECMP entry group 3 whose identifier is valid is selected from each group of lower-level ECMP entries cascaded with the ECMP entry group 2. In this case, the target path is the second path in FIG. 6. For this embodiment, refer to related descriptions of "determining a second path based on the ECMP entry group 2" in FIG. 6.

In some possible embodiments, each equal-cost path in the last-level ECMP entry corresponds to one segment routing traffic engineering tunnel SR_TE tunnel label, and each group of lower-level ECMP entries cascaded with the second group of ECMP entries corresponds to one private network label.

When a plurality of equal-cost paths exist in the first group of ECMP entries, SR_TE tunnel labels corresponding to different equal-cost paths may be the same or may be different, which is not specifically limited herein. It should be noted that the SR TE tunnel label and the private network label are generated by the network device in a route advertisement process. The network device may find, based on a destination address of the received packet, an ECMP entry corresponding to the destination address in the forwarding table, to obtain a label corresponding to the corresponding ECMP entry.

It should be noted that, when each group of ECMP entries included in the forwarding table of the network device is in two-level ECMP cascading, for a label corresponding to each group of ECMP entries, further refer to related descriptions of the case 1 to the case 3 in S103 in FIG. 6. Details are not described herein again.

In some possible embodiments, the forwarding table further includes a fourth group of ECMP entries, and the fourth group of ECMP entries is an upper-level ECMP entry of the second group of ECMP entries. A fourth ECMP identifier of the fourth group of ECMP entries indicates that at least one group of valid lower-level ECMP entries exists in a plurality of groups of lower-level ECMP entries cascaded with the fourth group of ECMP entries. Before determining whether the first ECMP identifier is valid, the method further includes: determining whether the second ECMP identifier of the second group of ECMP entries is valid. That is, when it is determined that the second ECMP identifier of the second group of ECMP entries is valid, it is further determined whether the first ECMP identifier of the first group of ECMP entries is valid.

In some possible embodiments, the plurality of groups of lower-level ECMP entries cascaded with the fourth group of ECMP entries further include a fifth group of ECMP entries. A fifth ECMP identifier of the fifth group of ECMP entries indicates that a plurality of groups of lower-level ECMP entries cascaded with the fifth group of ECMP entries are all invalid.

For example, the fourth group of ECMP entries may be the ECMP entry group 4 in the embodiment in FIG. 6, and the fifth group of ECMP entries may be the ECMP entry group 2 in FIG. 6. The second group of ECMP entries is equivalent to the ECMP entry group 5 in FIG. 6, and the first group of ECMP entries is equivalent to the ECMP entry group 6 in FIG. 6. Therefore, when the identifier of the ECMP entry group 2 indicates that the ECMP entry group 2 is invalid, the ECMP entry group 5 whose identifier is valid is selected from each group of lower-level ECMP entries cascaded with the ECMP entry group 4. The ECMP entry group 6 whose identifier is valid is selected from each group of lower-level ECMP entries cascaded with the ECMP entry group 5. In this case, the target path is the third path in FIG. 6. For this embodiment, refer to related descriptions of "determining a third path based on the ECMP entry group 4" in FIG. 6.

In some possible embodiments, each equal-cost path in the last-level ECMP entry corresponds to one segment routing traffic engineering tunnel SR_TE tunnel label, each group of lower-level ECMP entries cascaded with the second group of ECMP entries corresponds to one label distribution protocol LDP label, and each group of lower-level ECMP entries cascaded with the fourth group of ECMP entries corresponds to one private network label. It should be noted that the SR_TE tunnel label, the LDP label and the private network label are generated by the network device in a route advertisement process. The network device may find, based on a destination address of the received packet, an ECMP entry corresponding to the destination address in the forwarding table, to obtain a label corresponding to the corresponding ECMP entry.

For the last-level ECMP entry in the forwarding table, for example, the plurality of equal-cost paths in the first group of ECMP entries, SR TE tunnel labels corresponding to different equal-cost paths may be the same or may be different. This is not specifically limited herein. For each group of lower-level ECMP entries cascaded with the second group of ECMP entries, LDP labels corresponding to different lower-level ECMP entries may be the same or may be different. This is not specifically limited herein.

S203. Forward the packet based on the target path.

It can be learned that, in this embodiment of this application, the forwarding table includes a plurality of levels of ECMP entries, and each level of ECMP entries includes at least one group of ECMP entries. One corresponding ECMP identifier is set for each group of ECMP entries to indicate whether a valid equal-cost path exists in the group of ECMP entries. In this way, when a fault occurs on an equal-cost path in a group of ECMP entries, a valid equal-cost path may be reselected based on an ECMP identifier of the group of ECMP entries, or when a plurality of equal-cost paths in a group of ECMP entries are all faulty, route reselecting is performed based on an ECMP identifier of a previous-level ECMP entry of the group of ECMP entries, to save time for exchanging entry content when a path in an ECMP entry is faulty, implement fast path switching in an ECMP cascading scenario, reduce path fault convergence time, and improve path selection efficiency.

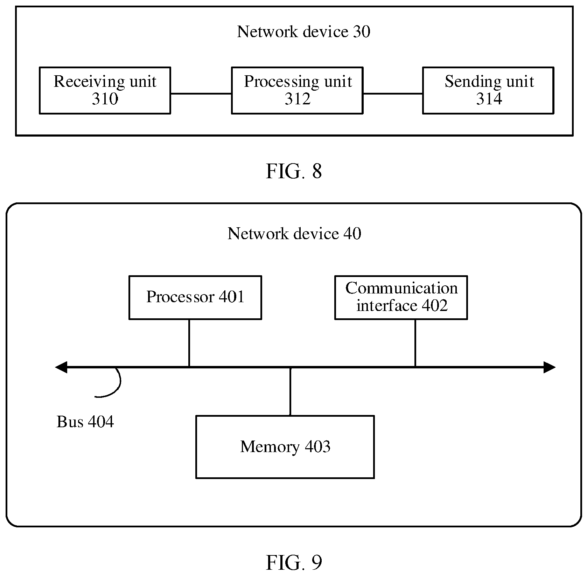

FIG. 8 is a schematic diagram of a functional structure of a network device according to an embodiment of this application. The network device 30 includes a receiving unit 310, a processing unit 312, and a sending unit 314. The network device 30 may be implemented by using hardware, software, or a combination of software and hardware.

The receiving unit 310 is configured to receive a packet. The processing unit 312 is configured to select, based on a first equal-cost multi-path ECMP identifier, a target path from a plurality of equal-cost paths in a first group of ECMP entries in a forwarding table. The sending unit 314 is configured to forward the packet based on the target path. The first ECMP identifier indicates that at least one valid equal-cost path exists in the plurality of equal-cost paths in the first group of ECMP entries. The first group of ECMP entries is a last-level ECMP entry in a plurality of levels of ECMP entries in the forwarding table.

Each functional module of the network device 30 may be configured to implement the method described in the embodiment in FIG. 7. In the embodiment in FIG. 7, the receiving unit 310 may be configured to perform S201, the processing unit 312 may be configured to perform S202, and the sending unit 314 may be configured to perform S203. Each functional module of the network device 30 may be further configured to implement the method described in the embodiment in FIG. 6. For brevity of the specification, details are not described herein again.

One or more of the units in the embodiment shown in FIG. 8 may be implemented by software, hardware, firmware, or a combination thereof. The software or firmware includes but is not limited to computer program instructions or code, and may be executed by a hardware processor. The hardware includes but is not limited to various integrated circuits, such as a central processing unit (central processing unit, CPU), a digital signal processor (digital signal processor, DSP), a field programmable gate array (field-programmable gate array, FPGA), or an application-specific integrated circuit (application-specific integrated circuit, ASIC).

This application further provides a network device. As shown in FIG. 9, the network device 40 includes a processor 401, a communication interface 402, a memory 403, and a bus 404. The processor 401, the memory 403, and the communication interface 402 communicate with each other via the bus 404. The network device 40 may be a router, a switch, or the like, or may be a component that is used in the foregoing network device and that can implement the foregoing method, for example, a board, a chip, or a line card. It should be understood that a quantity of processors and a quantity of memories in the network device 40 are not limited in this application.

The bus 404 may be a peripheral component interconnect (peripheral component interconnect, PCI) bus or an extended industry standard architecture (extended industry standard architecture, EISA) bus, or the like. The bus may be categorized as an address bus, a data bus, a control bus, or the like. For ease of representation, only one line is used to represent the bus in FIG. 9, but this does not mean that there is only one bus or only one type of bus. The bus 404 may include a path for transmitting information between components (for example, the memory 403, the processor 401, and the communication interface 402) of the network device 40.

The processor 401 may be a general-purpose CPU, an NP, a microprocessor, or may be one or more integrated circuits configured to implement the solutions of this application, for example, an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable logic gate array (field-programmable gate array, FPGA), generic array logic (generic array logic, GAL), or any combination thereof.

The memory 403 is configured to provide storage space. The storage space may store computer program instructions and data. For example, the memory 403 stores a forwarding table, the forwarding table includes a plurality of levels of ECMP entries, each level of ECMP entries in the plurality of levels of ECMP entries includes at least one group of ECMP entries, each group of ECMP entries corresponds to one ECMP identifier, and the ECMP identifier indicates whether a valid equal-cost path exists in a corresponding group of ECMP entries. The memory 403 may be a read-only memory (read-only memory, ROM) or another type of static storage device capable of storing static information and instructions, or may be a random access memory (random access memory, RAM) or another type of dynamic storage device capable of storing information and instructions, or may be an electrically erasable programmable read-only memory (electrically erasable programmable read-only Memory, EEPROM), a compact disc read-only memory (compact disc read-only memory, CD-ROM) or other compact disc storage, optical disc storage (including a compressed optical disc, a laser disc, an optical disc, a digital versatile disc, a Blu-ray disc, or the like), a magnetic disk storage medium or another magnetic storage device, or any other medium capable of carrying or storing expected program code in a form of an instruction or a data structure and capable of being accessed by a computer. This is not limited thereto. The memory 403 may exist independently, and is connected to the processor 401 via the bus 404. Alternatively, the memory 403 may be integrated with the processor 401.

The communication interface 402 may be configured to provide information input or output for the processor 401. Alternatively, the communication interface 402 may be configured to receive data sent from outside and/or send data to the outside. The communication interface 402 is configured to communicate with another device or a communication network by using any transceiver-type apparatus. The communication interface 402 includes a wired communication interface, and may include a wireless communication interface. The wired communication interface may be, for example, an Ethernet interface. The Ethernet interface may be an optical interface, an electrical interface, or a combination thereof. The wireless communication interface may be a wireless local area network (wireless local area network, WLAN) interface, a cellular network communication interface, or a combination thereof.

The processor 401 in the network device 40 is configured to read a computer program stored in the memory 403, to perform the foregoing method, for example, the path determining method described in FIG. 6 or FIG. 7.

In a possible design, the network device 40 may be one or more modules in an execution body (for example, the network device) that performs the method shown in FIG. 7, and the processor 401 may be configured to read one or more computer programs stored in a memory, to perform the following operations.

Receive a packet through the receiving unit 310.

Select a target path from a plurality of equal-cost paths in a first group of ECMP entries in a forwarding table based on a first equal-cost multi-path ECMP identifier.

Forward the packet based on the target path through the sending unit 314, where the first ECMP identifier indicates that at least one valid equal-cost path exists in the plurality of equal-cost paths in the first group of ECMP entries, and the first group of ECMP entries is a last-level ECMP entry in a plurality of levels of ECMP entries in the forwarding table.

In the foregoing embodiments in this specification, the description of each embodiment has respective focuses. For a part that is not described in detail in an embodiment, refer to related descriptions in other embodiments.

The technical solutions of this application essentially, or the part contributing to the conventional technology, or all or some of the technical solutions may be implemented in a form of a software product. A computer program product is stored in a storage medium and includes several instructions for instructing a device (which may be a personal computer, a server, or a network device, a robot, a single-chip microcomputer, a chip, a robot, or the like) to perform all or some of the steps of the methods described in embodiments of this application.

## Claims

1. A path determining method, applied to a network device, wherein the method comprises:
receiving a packet; and
selecting a target path from a plurality of equal-cost paths in a first group of ECMP entries in a forwarding table based on a first equal-cost multi-path ECMP identifier, and forwarding the packet based on the target path, wherein the first ECMP identifier indicates that at least one valid equal-cost path exists in the plurality of equal-cost paths in the first group of ECMP entries, wherein
the first group of ECMP entries is a last-level ECMP entry in a plurality of levels of ECMP entries in the forwarding table.

2. The method according to claim 1, wherein the target path is any valid equal-cost path in the plurality of equal-cost paths in the first group of ECMP entries.

3. The method according to claim 1 or 2, wherein the forwarding table further comprises a second group of ECMP entries, the second group of ECMP entries is an upper-level ECMP entry of the first group of ECMP entries, and a second ECMP identifier of the second group of ECMP entries indicates that at least one group of valid lower-level ECMP entries exists in a plurality of groups of lower-level ECMP entries cascaded with the second group of ECMP entries; and
before the selecting a target path, the method further comprises:
determining whether the first ECMP identifier of the first group of ECMP entries is valid.

4. The method according to claim 3, wherein the plurality of groups of lower-level ECMP entries cascaded with the second group of ECMP entries further comprise a third group of ECMP entries, and a third ECMP identifier of the third group of ECMP entries indicates that a plurality of equal-cost paths that are comprised in the third group of ECMP entries are all invalid.

5. The method according to claim 4, wherein each equal-cost path in the last-level ECMP entry corresponds to one segment routing traffic engineering tunnel SR_TE tunnel label, and each group of lower-level ECMP entries cascaded with the second group of ECMP entries corresponds to one private network label.

6. The method according to claim 3 or 4, wherein the forwarding table further comprises a fourth group of ECMP entries, the fourth group of ECMP entries is an upper-level ECMP entry of the second group of ECMP entries, and a fourth ECMP identifier of the fourth group of ECMP entries indicates that at least one group of valid lower-level ECMP entries exists in a plurality of groups of lower-level ECMP entries cascaded with the fourth group of ECMP entries; and
before the determining whether the first ECMP identifier is valid, the method further comprises:
determining whether the second ECMP identifier of the second group of ECMP entries is valid.

7. The method according to claim 6, wherein the plurality of groups of lower-level ECMP entries cascaded with the fourth group of ECMP entries further comprise a fifth group of ECMP entries, and a fifth ECMP identifier of the fifth group of ECMP entries indicates that a plurality of groups of lower-level ECMP entries cascaded with the fifth group of ECMP entries are all invalid.

8. The method according to claim 6 or 7, wherein each equal-cost path in the last-level ECMP entry corresponds to one segment routing traffic engineering tunnel SR_TE tunnel label, each group of lower-level ECMP entries cascaded with the second group of ECMP entries corresponds to one label distribution protocol LDP label, and each group of lower-level ECMP entries cascaded with the fourth group of ECMP entries corresponds to one private network label.

9. A path determining apparatus, wherein the apparatus comprises:
a receiving unit, configured to receive a packet;
a processing unit, configured to select a target path from a plurality of equal-cost paths in a first group of ECMP entries in a forwarding table based on a first equal-cost multi-path ECMP identifier; and
a sending unit, configured to forward the packet based on the target path, wherein the first ECMP identifier indicates that at least one valid equal-cost path exists in the plurality of equal-cost paths in the first group of ECMP entries, and the first group of ECMP entries is a last-level ECMP entry in a plurality of levels of ECMP entries in the forwarding table.

10. The apparatus according to claim 9, wherein the target path is any valid equal-cost path in the plurality of equal-cost paths in the first group of ECMP entries.

11. The apparatus according to claim 9 or 10, wherein the forwarding table further comprises a second group of ECMP entries, the second group of ECMP entries is an upper-level ECMP entry of the first group of ECMP entries, and a second ECMP identifier of the second group of ECMP entries indicates that at least one group of valid lower-level ECMP entries exists in a plurality of groups of lower-level ECMP entries cascaded with the second group of ECMP entries; and
the processing unit is further configured to: before selecting the target path, determine whether the first ECMP identifier of the first group of ECMP entries is valid.

12. The apparatus according to claim 11, wherein the plurality of groups of lower-level ECMP entries cascaded with the second group of ECMP entries further comprise a third group of ECMP entries, and a third ECMP identifier of the third group of ECMP entries indicates that a plurality of equal-cost paths that are comprised in the third group of ECMP entries are all invalid.

13. The apparatus according to claim 12, wherein each equal-cost path in the last-level ECMP entry corresponds to one segment routing traffic engineering tunnel SR_TE tunnel label, and each group of lower-level ECMP entries cascaded with the second group of ECMP entries corresponds to one private network label.

14. The apparatus according to claim 11 or 12, wherein the forwarding table further comprises a fourth group of ECMP entries, the fourth group of ECMP entries is an upper-level ECMP entry of the second group of ECMP entries, and a fourth ECMP identifier of the fourth group of ECMP entries indicates that at least one group of valid lower-level ECMP entries exists in a plurality of groups of lower-level ECMP entries cascaded with the fourth group of ECMP entries; and
the processing unit is further configured to: before determining whether the first ECMP identifier is valid, determine whether the second ECMP identifier of the second group of ECMP entries is valid.

15. The apparatus according to claim 14, wherein the plurality of groups of lower-level ECMP entries cascaded with the fourth group of ECMP entries further comprise a fifth group of ECMP entries, and a fifth ECMP identifier of the fifth group of ECMP entries indicates that a plurality of groups of lower-level ECMP entries cascaded with the fifth group of ECMP entries are all invalid.

16. The apparatus according to claim 14 or 15, wherein each equal-cost path in the last-level ECMP entry corresponds to one segment routing traffic engineering tunnel SR_TE tunnel label, each group of lower-level ECMP entries cascaded with the second group of ECMP entries corresponds to one label distribution protocol LDP label, and each group of lower-level ECMP entries cascaded with the fourth group of ECMP entries corresponds to one private network label.

17. A network device, wherein the network device comprises a memory and a processor, wherein
the memory is configured to store a forwarding table, the forwarding table comprises a plurality of levels of ECMP entries, each level of ECMP entries in the plurality of levels of ECMP entries comprises at least one group of ECMP entries, each group of ECMP entries corresponds to one ECMP identifier, and the ECMP identifier indicates whether a valid equal-cost path exists in a corresponding group of ECMP entries;
the memory is further configured to store instructions; and
the processor is configured to invoke the instructions to implement the method according to any one of claims 1 to 8.

18. A computer program product, wherein when the computer program product runs on a processor, a device is enabled to perform the method according to any one of claims 1 to 8.
